# EUROPÄISCHE PATENTSCHRIFT

(11) **EP 4 090 523 B1**
(45) Veröffentlichungstag und Bekanntmachung des Hinweises auf die Patenterteilung: **31.01.2024**
(21) Anmeldenummer: 20817239.5
(22) Anmeldetag: 30.11.2020
(51) Int. Cl.: B29D 30/06

(54) **VERFAHREN ZUM VULKANISIEREN EINES REIFENROHLINGS**
METHOD FOR VULCANISING A TYRE BLANK
PROCÉDÉ DE VULCANISATION D'UNE ÉBAUCHE DE PNEUMATIQUE

(30) Priorität: 13.01.2020 DE 102020200293
(43) Veröffentlichungstag der Anmeldung: 23.11.2022
(73) Patentinhaber: Continental Reifen Deutschland GmbH, 30165 Hannover (DE)
(72) Erfinder: FRICKE, Bernd, 30419 Hannover (DE); HESSE, Heiko, 30419 Hannover (DE); KIELHORN, Lars, 30419 Hannover (DE); KOVAC, Milos, 30419 Hannover (DE)
(74) Vertreter: Continental Corporation
(86) Internationale Anmeldenummer: PCT/EP2020/083842
(87) Internationale Veröffentlichungsnummer: WO 2021/144058

(56) Entgegenhaltungen:
- EP-A2- 0 733 456
- US-A- 5 055 245
- US-B1- 6 478 991

## Beschreibung

Die Erfindung betrifft ein Verfahren zum Vulkanisieren eines Reifenrohlings.

Die Vulkanisation eines Fahrzeugluftreifens erfolgt bekannterweise in einer Heizpresse mit einer Vulkanisationsform, in welcher der Reifenrohling in entsprechend ausgestalteten Formbestandteilen - Seitenwandschalen, Segmentring - unter Einwirkung von Wärme und Druck vulkanisiert wird. Dabei ist sowohl eine Wärmezufuhr von außen über Hohlräume in Heizplatten vorgesehen, die sogenannte Außenheizung, als auch eine Wärmezufuhr von innen, die sogenannte Innenheizung. Dazu wird ein in das Reifeninnere gebrachter flexibler Heizbalg mit einem Heizmedium gefüllt und so auf der Innenseite des Reifenrohlings Vulkanisationsenergie zugeführt. Für die Innenheizung kommen üblicherweise Dampf und ein Inertgas, beispielsweise Stickstoff, zum Einsatz, wobei zu Beginn einer Dampfheizung der Heizbalg für eine gewisse Zeit mit Sattdampf beaufschlagt wird. Dadurch erhält das System die erforderliche Vulkanisationswärme. Im Anschluss daran wird der Innendruck im Heizbalg mittels Inertgases sichergestellt, wobei dem System keine weitere Energie in Form von Wärme zugeführt wird. Folglich findet eine natürliche Kondensation des Dampfes im Heizbalginneren statt und es stellt sich ein ungeregelter Temperaturverlauf ein. Es besteht keine Möglichkeit, während der Inertgasphase Wärmeenergie zuzuführen. Insbesondere wenn im System Leckstellen vorhanden sind, kann ein unerwünscht hoher Energieverlust auftreten.

Ein weiteres Problem besteht darin, dass sich bei einer längeren Stillstandzeit der Vulkanisationspresse Bauteile der Innenheizung abkühlen können.

Dieser Umstand kann dazu führen, dass bei einem ersten Heizzyklus nach einer längeren Stillstandszeit die stärker abgekühlten Bauteile mehr Energie als sonst benötigen, um wieder auf Solltemperatur zu kommen. Diese Energie steht dann nicht mehr für die Vulkanisation des Reifenrohlings zur Verfügung.

Ein zu geringer Energieeintrag für den Vulkanisationsprozess kann zur Folge haben, dass sich z.B. spezielle Reifeneigenschaften verschlechtern können.

Die EP 0 733 456 A2 offenbart ein bekanntes Verfahren zur Herstellung von Fahrzeugreifen.

Der Erfindung liegt die Aufgabe zugrunde, das Innenheizverfahren diesbezüglich zu verbessern.

Gelöst wird die Aufgabe durch ein Verfahren nach Anspruch 1 mit den folgenden Schritten:
a) Anordnen eines zu vulkanisierenden Reifenrohlings in einer Vulkanisationsform,
b) Auswerten des Temperaturverlaufes des im Hohlraum der Innenheizung angeordneten Temperatursensors vor und während der Vulkanisation,
   wobei mit dem Temperaturverlauf eine Stillstandszeit der Vulkanisationspresse ermittelt werden kann,
c) Berechnung einer Anpassung der Zeitdauer für die Dampfphase der Innenheizung, wenn die Stillstandszeit von einem vorgegebenen Schwellwert abweicht,
d) Einführen von Dampf in die Innenheizung der Vulkanisationspresse und Durchführen der Dampfphase für die berechnete Zeitdauer,
   wobei mit der Anpassung der Zeitdauer für die Dampfphase ein optimaler Wärmeenergieeintrag für die Vulkanisation des Reifenrohlings erfolgen soll,
e) Messung des tatsächlichen Ist-Temperaturverlaufes mit dem Temperatursensor der Innenheizung,
f) Vergleich des tatsächlichen Ist-Temperaturverlaufes mit einem Zieltemperaturverlauf für einen bestimmten Fahrzeugreifen-Typ,
g) Anpassen der Zeitdauer für die flexible Heizphase der Innenheizung,
   wobei mit der Anpassung der Zeitdauer für die Heizphase ein optimaler Wärmeenergieeintrag für die Vulkanisation des Reifenrohlings erfolgen soll,
h) Fertigstellen der Reifenvulkanisation.

Ein Vorteil der Erfindung ist insbesondere darin zu sehen, dass mit dem neuen Verfahren der Wärmeenergieeintrag über die Innenheizung wesentlich verbessert wird. Vor Beginn des Vulkanisationsprozesses misst der Temperatursensor der Innenheizung die jeweilige Ist-Temperatur.

Über diese Temperatur kann festgestellt werden, ob die Vulkanisationspresse bereits eine längere Stillstandszeit hinter sich hat. Zum Beispiel könnte nach einem Wochenende die Vulkanisationspresse wieder in Betrieb genommen worden sein.

In diesem Fall würde die Vulkanisationspresse zwar vorgewärmt werden, würde jedoch dennoch mit einer kühleren Balginnentemperatur starten. Würde bei diesen Bedingungen der erste Heizzyklus eine normale Heizzeit ansetzen, wie sie normalerweise für den Fahrzeugreifentyp vorgesehen ist, wäre der Wärmeenergieeintrag für den Fahrzeugreifen zu gering.

Das liegt u.a. daran, dass beispielsweise der Mittenmechanismus des Heizbalges sowie der Heizbalg selbst erst wieder auf eine normale Produktionstemperatur gebracht werden müssen. Mit dem neuen Verfahren wird die jeweilige Stillstandszeit der Vulkanisationspresse und/oder die Starttemperatur berücksichtigt und anschließend die Zeitdauer für die Dampfphase entsprechend angepasst. Die Zeitdauer für die Dampfphase wird soweit verlängert, dass der Fahrzeugreifen mit einem optimalen Wärmeenergieeintrag vulkanisiert wird.

In einer vorteilhaften Weiterbildung der Erfindung ist vorgesehen, dass der Schwellwert für eine Abweichung bei ca. 30 Minuten liegt.

Im Normalfall wird die Vulkanisationspresse nach Entnahme des fertig vulkanisierten Fahrzeugreifens wieder mit einem neuen Reifenrohling bestückt. Die Stillstandszeit bei einem normalen Produktionsprozess liegt normalerweise unter 30 Minuten.

In einer weiteren vorteilhaften Weiterbildung der Erfindung ist vorgesehen, dass die Dampfphase bei einer Stillstandzeit von größer als 30 Minuten und kleiner als 60 Minuten um ca. 10% verlängert wird.

Bei dieser Verlängerung der Zeitdauer für die Dampfphase wird ein optimaler Wärmeenergieeintrag über die Innenheizung erreicht.

In einer weiteren vorteilhaften Weiterbildung der Erfindung ist vorgesehen, dass die Dampfphase bei einer Stillstandzeit von größer als 60 Minuten und kleiner als 90 Minuten um ca. 20% verlängert wird.

In einer weiteren vorteilhaften Weiterbildung der Erfindung ist vorgesehen, dass die Dampfphase bei einer Stillstandzeit von größer als 90 Minuten und kleiner als 120 Minuten um ca. 30% verlängert wird.

In einer weiteren vorteilhaften Weiterbildung der Erfindung ist vorgesehen, dass die Dampfphase bei einer Stillstandzeit von größer als 120 Minuten um ca. 40% verlängert wird, wobei bei den folgenden Heizzyklen für die nachfolgenden Reifenrohlinge ebenfalls eine Verlängerung der Dampfphasen erfolgt.

Bei einer so langen Stillstandszeit der Vulkanisationspresse haben sich alle Bauteile der Innenheizung erheblich abgekühlt. In diesem Fall ist es ebenfalls vorteilhaft, die Dampfphasen der darauffolgenden Heizzyklen anzupassen.

In einer weiteren vorteilhaften Weiterbildung der Erfindung ist vorgesehen, dass beim ersten nachfolgenden Heizzyklus die Zeitdauer der Dampfphase um ca. 10 % verlängert wird,
wobei beim zweiten nachfolgenden Heizzyklus die Zeitdauer der Dampfphase um ca. 5 % verlängert wird.

In einer weiteren vorteilhaften Weiterbildung der Erfindung ist vorgesehen, dass die Dampfphase bei einer Stillstandzeit von kleiner als 30 Minuten an die Abweichung zwischen tatsächlichen Temperaturverlauf und Zieltemperaturverlauf des vorangegangenen Heizzyklus angepasst wird.

Während des Heizzyklus wird die Temperatur der Innenheizung kontinuierlich gemessen. Für den Fall, dass der tatsächliche Ist-Temperaturverlauf vom Zieltemperaturverlauf signifikant abweicht, erfolgt nachfolgend eine Anpassung der Zeitdauer für die Dampfphase für den darauffolgenden Heizzyklus.

Dadurch wird der Wärmeenergieeintrag für die Vulkanisation der Reifenrohlinge wesentlich optimiert.

In einer weiteren vorteilhaften Weiterbildung der Erfindung ist vorgesehen, dass während der Heizphase die Temperaturabweichungen zwischen der Ist-Temperatur und der Zieltemperatur aufsummiert und gemittelt werden,
wobei nachfolgend mit einem mathematischen Algorithmus die Heizzeitanpassung berechnet wird.

Mit dieser Methode lassen sich auf einfache Weise die Temperaturabweichungen ermitteln und berechnen, welcher Wärmeenergieeintrag noch fehlt, um eine optimale Vulkanisation für den Fahrzeugreifen zu erzielen.

Weitere Merkmale, Vorteile und Einzelheiten der Erfindung werden nun anhand der Figuren, die schematisch ein Ausführungsbeispiel darstellen, näher beschrieben. Dabei zeigen
Fig. 1 eine Schnittdarstellung durch eine Reifenvulkanisationsform im geschlossenen Zustand mit eingebrachtem Rohreifen bzw. Reifenrohling und
Fig. 2 ein Diagramm mit Temperaturverläufen im Heizbalginneren während der Vulkanisation des Rohreifens.

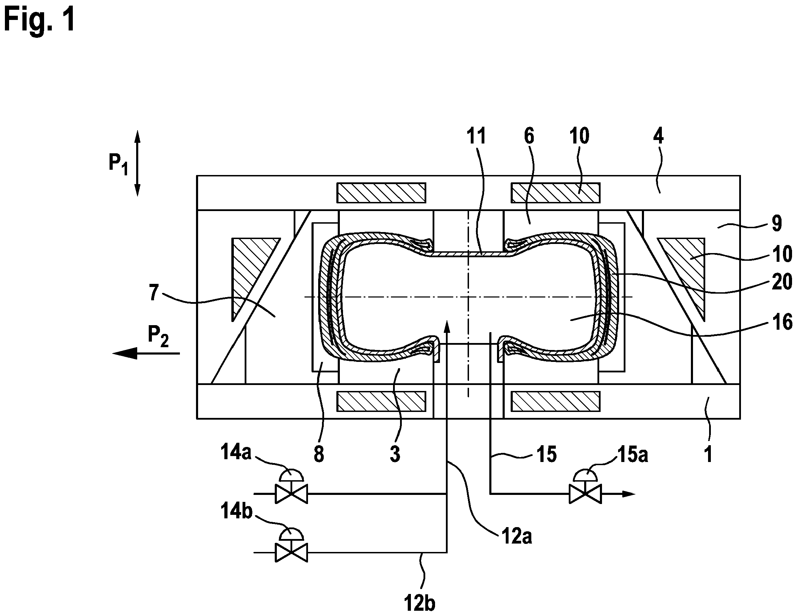

Fig. 1 zeigt die wesentlichen Bestandteile einer üblichen Vulkanisationsform für einen Fahrzeugluftreifen 20. Die Vulkanisationsform befindet sich innerhalb einer Vulkanisationspresse bzw. Heizpresse. Vom grundsätzlichen Aufbau her umfasst die Heizpresse einen Pressenoberteil und einen Pressenunterteil, die mit den erforderlichen Mechanismen zum Positionieren des zu vulkanisierenden Reifens, zum Betätigen (Öffnen und Schließen) der Vulkanisationsform, zum Einbringen des Heizmediums und zum Entfernen des fertig vulkanisierten Reifens versehen ist.

Die in Fig. 1 gezeigte Vulkanisationsform ist eine mehrteilige Containerform mit einer unteren Heizplatte 1, einer unteren Seitenwandschale 3, einer oberen Heizplatte 4 und einer oberen Seitenwandschale 6. Zu jenen Bestandteilen der Vulkanisationspresse, die zum Öffnen und Schließen in senkrechter Richtung (Pfeil P₁) üblicherweise bewegt werden, gehört die Heizplatte 4 mit der an dieser angeordneten oberen Seitenwandschale 6. Die Vulkanisationsform weist ferner einen Segmentring 7 auf, der ein Vielzahl Formsegmente besitzt, welche beim Öffnen der Vulkanisationsform radial, in Richtung des Pfeiles P₂ in Fig. 1 auseinandergefahren werden und derart den fertig vulkanisierten Reifen 20 freigeben. Der Segmentring 7 ist innenseitig mit Profileinsätzen 8 versehen, die den profilierten Laufstreifen des Reifens 20 ausformen. An den Seitenwandschalen 3 und 6 sind nicht dargestellte Wulstringe befestigt, welche die Wulstbereiche des Reifens 20 formen. An der oberen Heizplatte 4 ist ein Schließring 9 angeordnet, dessen abgeschrägte Innenfläche mit gegensinnig abgeschrägten Außenflächen der Segmente des Segmentringes 7 derart zusammenwirkt, dass beim Schließen der Vulkanisationsform die Segmente in radialer Richtung zum geschlossenen Segmentring 7 zusammengefahren werden. In der unteren Heizplatte 1, der oberen Heizplatte 4 und dem Schließring 9 sind Heizkammern 10 enthalten, in welche zum Vulkanisieren des Reifens ein Heizmedium eingeleitet wird.

In Fig. 1 ist ferner ein üblicher Heizbalg 11 angedeutet, welcher in bekannter Weise angeordnet ist und mit Satdampf gefüllt wird, um den Rohreifen in der Form von innen her zu zentrieren, wobei der Heizbalg 11 in eine reifengemäße Torusform gebracht wird. Nach dem vollständigen Schließen der Heizpresse wird der Reifenrohling von außen, über das in die Heizkammern 10 eingeleitete Heizmedium, üblicherweise heißer Wasserdampf, und von innen mit der Innenheizung, über den Heizbalg 11, beheizt.

Als Heizmedium für die über dem Heizbalg 11 erfolgende Innenheizung wird eine Kombination aus Wasserdampf und Inertgas, beispielsweise Stickstoff, eingesetzt. Bei einer Dampf/Inertgasheizung wird der Heizbalg 11 zuerst für eine gewisse Zeit mit Dampf beaufschlagt. Dabei handelt es sich um die Dampfphase. Dabei erhalten der Heizbalg 11 und der Reifenrohling 20 die erforderliche Prozesswärme. Anschließend erfolgt eine Anhebung des Druckes im Inneren des Heizbalges 11 durch Zufuhr von Inertgas. Danach wird mit Beginn der Inertgaszufuhr keine weitere Energie in Form von Wärme mehr zugeführt. Es findet eine natürliche Kondensation des Dampfes im Heizbalg statt und es stellt sich ein freier, ungeregelter Temperaturverlauf ein.

Wie Fig. 1 zeigt, befindet sich im Inneren des Heizbalges 11 ein Temperatursensor 16, welcher während des gesamten Vulkanisationsprozesses die im Heizbalginneren herrschende Temperatur misst und ständig entsprechende Signale als Istwerte an eine nicht gezeigte elektronische Einrichtung weiterleitet. Der Sensor 16 ist z.B. am nicht dargestellten Mittenmechanismus des Heizbalges 11 angeordnet. Fig. 1 zeigt ferner schematisch die Zuführung 12a für Wasserdampf und die Zuführung 12b für Inertgas, mit Ventilen 14a, 14b, über welche die Durchflussmengen für Wasserdampf und Inertgas geregelt werden. Eine Druckminderung im Heizbalginneren ist über ein geregeltes Ventil 15a in einen Rücklauf 15 möglich.

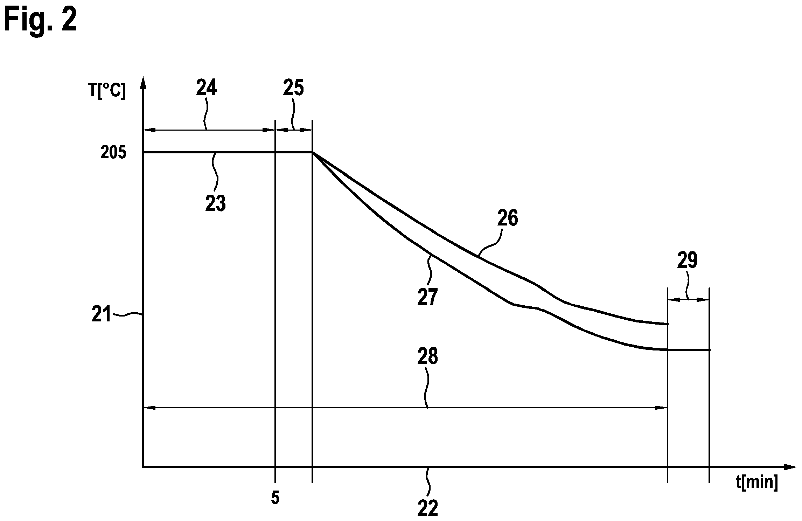

Fig. 2 zeigt in einem Diagramm einen Temperaturverlauf, der im Heizbalg 11 während der Vulkanisation gemessen wird. Auf der X-Achse 22 ist die Vulkanisationszeit in Minuten aufgetragen, auf der Y-Achse 21 ist die Isttemperatur in °C angegeben.

Der Heizzyklus für die Vulkanisation des Fahrzeugreifens beginnt zunächst mit einer Dampfphase. Während der Dampfphase wird Heißwasserdampf in den Heizbalg eingeleitet und es stellt sich eine konstante Temperatur ein, wie sie mit der Gerade 23 dargestellt ist. Die konstante Temperatur kann beispielsweise bei 205° Celsius liegen.

Im normalen Produktionsprozess, wenn sich die Heizpresse auf Produktiontemperatur befindet, beträgt die Dauer für die Dampfphase beispielsweise fünf Minuten. Anschließend würde das Ventil für die Zuführung des Wasserdampfes geschlossen werden.

Bei diesem Heizzyklus wurde jedoch über den Temperatursensor der Innenheizung festgestellt, dass die Vulkanisationspresse eine längere Zeit nicht geheizt hat.

Mit dem Temperatursensor wurde ermittelt, dass die Stillstandszeit zwischen 30 und 60 Minuten lag. Aufgrund der Abkühlung der Innenheizung wird die Zeitdauer für die Dampfphase entsprechend verlängert.

In diesem Fall wird die Zeitdauer um 10 % gegenüber der Normalzeitdauer für die Dampfphase verlängert.

Die Verlängerung für die Zeitdauer ist im Diagramm mit der Zeitdauer 25 dargestellt, die einer Zeit von ca. 30 Sekunden entspricht.

Nach der Verlängerung der Dampfphase wird das Ventil für die Zuführung des Sattdampfes wieder geschlossen. Anschließend fällt die Temperatur der Innenheizung kontinuierlich ab.

Der Temperaturverlauf 27 zeigt den tatsächlichen Ist-Temperaturverlauf, der mit dem Temperatursensor der Innenheizung gemessen wird. Dieser Ist-Temperaturverlauf wird kontinuierlich mit einem Zieltemperaturverlauf 26 verglichen.

Der Zieltemperaturverlauf 26 zeigt den Temperaturverlauf, bei dem ein optimaler Wärmeenergieeintrag für den zu vulkanisierenden Reifenrohling erfolgt. Im Diagramm ist dargestellt, dass der tatsächliche Ist-Temperaturverlauf vom Zieltemperaturverlauf abweicht. Der tatsächliche Ist-Temperaturverlauf zeigt einen abweichenden Temperaturabfall der Innenheizung.

Die Zeitdauer 28 der Heizphase gibt die Zeit wieder, die normalerweise für den zu vulkanisierenden Reifenrohling vorgesehen ist. Sie kann beispielsweise zwischen 40 und 60 Minuten liegen. Würde der Heizzyklus nach dieser normalen Heizzeitdauer abgebrochen werden, wäre der Wärmeenergieeintrag für den Fahrzeugreifen zu gering. Die Zeitdauer für die Heizphase wird um die Zeitdauer 29 verlängert, um einen optimalen Wärmeeintrag für den Fahrzeugreifen zu erreichen.

Je nach dem, wie stark der gemessene Ist-Temperaturverlauf von dem Zieltemperaturverlauf abweicht, wird mit einem mathematischen Algorithmus die Verlängerung der Heizzeitphase berechnet.

Die Abweichung zwischen dem Ist-Temperaturverlauf und dem Zieltemperaturverlauf führt ebenfalls dazu, dass bei dem nächsten Heizzyklus die Zeitdauer für die Dampfphase angepasst werden kann.

Mit dem Verfahren kann sichergestellt werden, dass die vulkanisierten Reifenrohlinge immer eine gleichbleibende hohe Qualität aufweisen.

### Bezugszeichenliste

- 1: untere Heizplatte
- 3: untere Seitenwandschale
- 4: obere Heizplatte
- 6: obere Seitenwandschale
- 7: Segmentring
- 8: Profileinsätze
- 9: Schließring
- 10: Heizkammer
- 11: Heizbalg
- 12a: Zuführungen
- 12b: Zuführungen
- 14a: Ventil
- 14b: Ventil
- 15: Rücklauf
- 15a: Ventil
- 16: Temperatursensor der Innheizung
- 20: Reifenrohling
- 21: Temperatur T in °C
- 22: Zeitdauer in Minuten
- 23: Temperatur während der Dampfphase
- 24: Dampfphase bei einem normalen Heizzyklus, z.B. 5 Minuten
- 25: Um 10 % verlängerte Dampfphase, z.B. 30 Sekunden
- 26: Zieltemperaturverlauf
- 27: tatsächlicher Temperaturverlauf
- 28: Heizphase bei einem normalen Heizzyklus, z.B. 40 Minuten
- 29: Verlängerte Heizphase

## Patentansprüche

1. Verfahren zum Vulkanisieren eines Reifenrohlings (20) mit den folgenden Schritten:
a) Anordnen eines zu vulkanisierenden Reifenrohlings (20) in einer Vulkanisationsform,
b) Auswerten des Temperaturverlaufes des im Hohlraum der Innenheizung angeordneten Temperatursensors (16),
wobei mit dem Temperaturverlauf eine Stillstandszeit der Vulkanisationspresse ermittelt werden kann,
c) Berechnung einer Anpassung der Zeitdauer für die Dampfphase (24) der Innenheizung, wenn die Stillstandszeit von einem vorgegebenen Schwellwert abweicht,
d) Einführen von Dampf in die Innenheizung der Vulkanisationspresse und Durchführen der Dampfphase (24, 25) für die berechnete Zeitdauer,
wobei mit der Anpassung der Zeitdauer für die Dampfphase (24, 25) ein optimaler Wärmeenergieeintrag für die Vulkanisation des Reifenrohlings (20) erfolgen soll,
e) Messung des tatsächlichen Ist-Temperaturverlaufes mit dem Temperatursensor (16) der Innenheizung,
f) Vergleich des tatsächlichen Ist-Temperaturverlaufes (27) mit einem Zieltemperaturverlauf (26) für einen bestimmten Fahrzeugreifen-Typ,
g) Anpassen der Zeitdauer für die flexible Heizphase (28) der Innenheizung, wobei mit der Anpassung der Zeitdauer für die Heizphase (28,29) ein optimaler Wärmeenergieeintrag für die Vulkanisation des Reifenrohlings (20) erfolgen soll,
h) Fertigstellen der Reifenvulkanisation.

2. Verfahren nach Anspruch 1,
**dadurch gekennzeichnet, dass**
der Schwellwert für eine Abweichung bei ca. 30 Minuten liegt.

3. Verfahren nach einem der vorhergehenden Ansprüche,
**dadurch gekennzeichnet, dass**
die Dampfphase (24) bei einer Stillstandzeit von größer als 30 Minuten und kleiner als 60 Minuten um ca. 10% verlängert wird.

4. Verfahren nach einem der vorhergehenden Ansprüche,
**dadurch gekennzeichnet, dass**
die Dampfphase (24) bei einer Stillstandzeit von größer als 60 Minuten und kleiner als 90 Minuten um ca. 20% verlängert wird.

5. Verfahren nach einem der vorhergehenden Ansprüche,
**dadurch gekennzeichnet, dass**
die Dampfphase (24) bei einer Stillstandzeit von größer als 90 Minuten und kleiner als 120 Minuten um ca. 30% verlängert wird.

6. Verfahren nach einem der vorhergehenden Ansprüche,
**dadurch gekennzeichnet, dass**
die Dampfphase (24) bei einer Stillstandzeit von größer als 120 Minuten um ca. 40% verlängert wird,
wobei bei den folgenden Heizzyklen für die nachfolgenden Reifenrohlinge ebenfalls eine Verlängerung der Dampfphasen erfolgt.

7. Verfahren nach Anspruch 6,
**dadurch gekennzeichnet, dass**
beim ersten nachfolgenden Heizzyklus die Zeitdauer der Dampfphase um ca. 10 % verlängert wird,
wobei beim zweiten nachfolgenden Heizzyklus die Zeitdauer der Dampfphase um ca. 5 % verlängert wird.

8. Verfahren nach einem der vorhergehenden Ansprüche,
**dadurch gekennzeichnet, dass**
die Dampfphase (24) bei einer Stillstandzeit von kleiner als 30 Minuten an die Abweichung zwischen tatsächlichen Temperaturverlauf (27) und Zieltemperaturverlauf (26) des vorangegangenen Heizzyklus angepasst wird.

9. Verfahren nach einem der vorhergehenden Ansprüche,
**dadurch gekennzeichnet, dass**
während der Heizphase die Temperaturabweichungen zwischen der Ist-Temperatur und der Zieltemperatur aufsummiert und gemittelt werden,
wobei nachfolgend mit einem mathematischen Algorithmus die Heizzeitanpassung (29) berechnet wird.

## Claims

1. Method of vulcanizing a green tire (20), having the following steps:
a) placing a green tire (20) to be vulcanized in a vulcanization mold,
b) evaluating the temperature progression from the temperature sensor (16) disposed in the cavity of the inner heater,
wherein the temperature progression can be used to ascertain an idle time of the vulcanization press,
c) calculating an adjustment in the duration for the steam phase (24) of the inner heater when the idle time varies from a defined threshold,
d) introducing steam into the inner heater of the vulcanization press and performing the steam phase (24, 25) for the calculated duration,
wherein the adjustment of the duration for the steam phase (24, 25) is intended to ensure an optimal input of thermal energy for the vulcanization of the green tire (20),
e) measuring the actual temperature progression with the temperature sensor (16) in the inner heater,
f) comparing the actual temperature progression (27) with a target temperature progression (26) for a particular vehicle tire type,
g) adjusting the duration for the flexible heating phase (28) of the inner heater, wherein the adjustment of the duration for the heating phase (28, 29) is intended to ensure an optimal input of thermal energy for the vulcanization of the green tire (20),
h) completing the tire vulcanization.

2. Method according to Claim 1,
**characterized in that**
the threshold value for a variance is about 30 minutes.

3. Method according to either of the preceding claims,
**characterized in that**
the steam phase (24) is extended by about 10% in the event of an idle time of greater than 30 minutes and less than 60 minutes.

4. Method according to any of the preceding claims,
**characterized in that**
the steam phase (24) is extended by about 20% in the event of an idle time of greater than 60 minutes and less than 90 minutes.

5. Method according to any of the preceding claims,
**characterized in that**
the steam phase (24) is extended by about 30% in the event of an idle time of greater than 90 minutes and less than 120 minutes.

6. Method according to any of the preceding claims,
**characterized in that**
the steam phase (24) is extended by about 40% in the event of an idle time of greater than 120 minutes,
wherein there is likewise an extension in the steam phases in the subsequent heating cycles for the subsequent green tires.

7. Method according to Claim 6,
**characterized in that**
the duration of the steam phase is extended by about 10% in the first subsequent heating cycle,
wherein the duration of the steam phase is extended by about 5% in the second subsequent heating cycle.

8. Method according to any of the preceding claims,
**characterized in that**
the steam phase (24), in the case of an idle time of less than 30 minutes, is matched to the variance between the actual temperature progression (27) and target temperature progression (26) of the preceding heating cycle.

9. Method according to any of the preceding claims,
**characterized in that**
the temperature variances between the actual temperature and the target temperature during the heating phase are added up and averaged,
wherein a mathematical algorithm is subsequently used to calculate the heating time adjustment (29).

## Revendications

1. Procédé permettant de vulcaniser une ébauche de pneumatique (20), comprenant les étapes suivantes consistant à :
a) disposer une ébauche de pneumatique (20) à vulcaniser dans un moule de vulcanisation,
b) analyser le profil de température du capteur de température (16) disposé dans la cavité du dispositif de chauffage interne,
le profil de température permettant de déterminer un temps d'arrêt de la presse de vulcanisation,
c) calculer une adaptation de la durée de la phase vapeur (24) du dispositif de chauffage interne si le temps d'arrêt s'écarte d'une valeur seuil prédéfinie,
d) introduire de la vapeur dans le dispositif de chauffage interne de la presse de vulcanisation et réaliser la phase vapeur (24, 25) pendant la durée calculée, dans lequel l'adaptation de la durée de la phase vapeur (24, 25) doit s'accompagner d'un apport en énergie thermique optimal pour la vulcanisation de l'ébauche de pneumatique (20),
e) mesurer le profil de température réel effectif à l'aide du capteur de température (16) du dispositif de chauffage interne,
f) comparer le profil de température réel effectif (27) avec un profil de température cible (26) pour un type de pneumatique de véhicule déterminé,
g) adapter la durée de la phase de chauffage flexible (28) du dispositif de chauffage interne, dans lequel l'adaptation de la durée de la phase de chauffage (28, 29) doit s'accompagner d'un apport en énergie thermique optimal pour la vulcanisation de l'ébauche de pneumatique (20),
h) terminer la vulcanisation du pneumatique.

2. Procédé selon la revendication 1, **caractérisé en ce que** la valeur seuil d'un écart se situe à environ 30 minutes.

3. Procédé selon l'une quelconque des revendications précédentes, **caractérisé en ce que** la phase vapeur (24) est prolongée d'environ 10 % pour un temps d'arrêt supérieur à 30 minutes et inférieur à 60 minutes.

4. Procédé selon l'une quelconque des revendications précédentes, **caractérisé en ce que** la phase vapeur (24) est prolongée d'environ 20 % pour un temps d'arrêt supérieur à 60 minutes et inférieur à 90 minutes.

5. Procédé selon l'une quelconque des revendications précédentes, **caractérisé en ce que** phase vapeur (24) est prolongée d'environ 30 % pour un temps d'arrêt supérieur à 90 minutes et inférieur à 120 minutes.

6. Procédé selon l'une quelconque des revendications précédentes, **caractérisé en ce que** la phase vapeur (24) est prolongée d'environ 40 % pour un temps d'arrêt supérieur à 120 minutes,
dans lequel un prolongement des phases vapeur est également réalisé pour les ébauches de pneumatique suivantes lors des cycles de chauffage suivants.

7. Procédé selon la revendication 6, **caractérisé en ce que** la durée de la phase vapeur est prolongée d'environ 10 % lors du premier cycle de chauffage suivant,
dans lequel la durée de la phase vapeur est prolongée d'environ 5 % lors du deuxième cycle de chauffage suivant.

8. Procédé selon l'une quelconque des revendications précédentes, **caractérisé en ce que** pour un temps d'arrêt inférieur à 30 minutes, la phase vapeur (24) est adaptée à l'écart entre le profil de température effectif (27) et le profil de temps cible (26) du cycle de chauffage précédent.

9. Procédé selon l'une quelconque des revendications précédentes, **caractérisé en ce que** pendant la phase de chauffage, les écarts de température entre la température réelle et la température cible sont totalisés et moyennés,
dans lequel l'adaptation de temps de chauffage (29) est ensuite calculée à l'aide d'un algorithme mathématique.
